# EUROPÄISCHE PATENTANMELDUNG

(11) **EP 1 172 828 A2**
(43) Veröffentlichungstag der Anmeldung: **16.01.2002**
(21) Anmeldenummer: 01110617.6
(22) Anmeldetag: 30.04.2001
(51) Int. Cl.: H01G 9/035

(54) **Betriebselektrolyt, Aluminium-Elektrolyt-Kondensator mit dem Betriebselektrolyt und Verwendung des Betriebselektrolyten**

(30) Priorität: 10.07.2000 DE 10033503
(71) Anmelder: EPCOS AG, 81541 München (DE)
(72) Erfinder: Ebel, Thomas, 89522 Heidenheim (DE)
(74) Vertreter: Epping Hermann & Fischer

(57) **Zusammenfassung**

Die Erfindung betrifft einen Betriebselektrolyten für Elektrolytkondensatoren, der durch die Verwendung von Polyvinylalkoholen gekennzeichnet ist. Ferner betrifft die Erfindung einen Aluminium-Elektrolyt-Kondensator mit dem erfindungsgemäßen Betriebselektrolyten. Darüber hinaus betrifft die Erfindung die Verwendung des erfindungsgemäßen Betriebselektrolyten. Der erfindungsgemäße Betriebselektrolyt zeichnet sich durch eine verbesserte Leitfähigkeit bei gleichbleibender Funkenspannung aus.

## Beschreibung

Die Erfindung betrifft einen Betriebselektrolyten für einen Aluminium-Elektrolyt-Kondensator, der Ethylenglykol, Diethylenglykol und Ammoniumpentaborat enthält. Ferner betrifft die Erfindung einen Aluminium-Elektrolyt-Kondensator mit dem Betriebselektrolyt. Darüber hinaus betrifft die Erfindung die Verwendung des Betriebselektrolyten.

Aluminium-Elektrolyt-Kondensatoren sind aufgebaut als Schichtstapel aus einer Kathodenfolie, die beispielsweise eine dünne, aufgerauhte Al-Folie mit einer Dicke zwischen 20 und 50 µm sein kann, und einer Anodenfolie, die beispielsweise eine ca. 100 µm dicke, aufgerauhte Al-Folie sein kann und die eine dielektrisch wirksame Oxidschicht aufweist, die durch elektrochemische Verfahren direkt auf der Folie aufgebracht ist. Auch die Kathodenfolie weist eine dünne, ca. 1,5-3 nm dicke Oxidschicht auf. Der Schichtstapel liegt üblicherweise in Form eines auf einen Dorn gewickelten Wickels vor, der in einen Aluminiumbecher eingebaut ist.

Zwischen den Folien befindet sich eine ein- oder mehrlagige Papierschicht, die mit dem Betriebselektrolyten imprägniert wird. Dieser Betriebselektrolyt stellt die eigentliche Kathode dar.

Es sind Betriebselektrolyten der eingangs genannten Art bekannt, die zusätzlich noch MMA-10RA sowie Mannit enthalten. Diese Betriebselektrolyten haben den Nachteil, daß sie bei einer Funkenspannung von etwa 475 V eine sehr niedrige Leitfähigkeit von etwa 1,2 mS/cm aufweisen. Dadurch haben die den bekannten Betriebselektrolyten enthaltenden Kondensatoren einen hohen Wirkwiderstand (Electrostatic serial resistance ESR), was zu einer hohen Verlustwärme während des Betriebs der Aluminium-Elektrolyt-Kondensatoren führt.

Ziel der vorliegenden Erfindung ist es daher, einen Betriebselektrolyten für Aluminium-Elektrolyt-Kondensatoren bereitzustellen, der bei gleicher oder sogar höherer Funkenspannung eine höhere Leitfähigkeit aufweist.

Dieses Ziel wird erfindungsgemäß durch ein Betriebselektrolyten nach Anspruch 1 erreicht. Weitere Ausgestaltungen der Erfindung, ein Aluminium-Elektrolyt-Kondensator mit dem erfindungsgemäßen Betriebselektrolyten sowie die Verwendung des Betriebselektrolyten sind den weiteren Ansprüchen zu entnehmen.

Die Erfindung gibt einen Betriebselektrolyten an mit:
a) 25 - 90 Gew.-% Ethylenglykol
b) 20 - 40 Gew.-% Diethylenglykol
c) 0,2 - 2 Gew.-% p-Nitrobenzoesäure
d) 0,05 - 0,2 Gew.-% Ammoniumhypophosphit
e) 2 - 8 Gew.-% Ammoniumpentaborat
f) 0 - 3 Gew.-% eines oder mehrerer Polyvinylalkohole
g) 10 - 50 Gew.-% einer Stoffmischung, die die Diammoniumsalze von 2-Methyl-Nonandisäure, 2,4-Dimethyl-4-Methoxy-Carbonyl-Undecandisäure, 2,4,6-Trimethyl-4,6-Dimethoxy-Carbonyl-Tridecandisäure und 8,9-Dimethyl-8,9-Dimethoxy-Carbonyl-Hexadecandiesäure enthält.

Neben diesen wesentlichen Bestandteilen kann der erfindungsgemäße Betriebselektrolyt noch geringe Mengen weiterer Bestandteile enthalten, die die gewünschten Eigenschaften der Mischung nicht beeinträchtigen.

Aus der bekannten Stoffgruppe der Polyvinylalkohole kann der Fachmann einen oder auch mehrere (dann miteinander vermischt) auswählen. Beispielhaft kommt ein Polyvinylalkohol in Betracht, dessen Monomer die Struktur [OH = C - C = OH]ₙ hat und der einen Polarisationsgrad n = 300 aufweist. Daneben kommen aber auch noch eine ganze Reihe weiterer, dem Fachmann bekannter Polyvinylalkohole in Betracht.

Die unter g) genannte Stoffmischung wird dem Betriebselektrolyten vorteilhaft in Form von MMA-10RA beigemengt. MMA-10RA ist eine dem Fachmann bekannte Substanzklasse, die die unter g) genannten Bestandteile enthält und z. B. in Form einer 20 %igen Lösung der Diammoniumsalze von MMA-10R in Ethylenglykol erhältlich ist. Unter MMA-10R ist dabei eine Mischung mit folgenden Bestandteilen zu verstehen:
a) 40 - 51 Gewichtsprozent 2-Methyl-Nonandisäure
b) 10 - 16 Gewichtsprozent 2,4-Dimethyl-4-Methoxy-Carbonyl-Undecandisäure
c) 10 - 14 Gewichtsprozent 2,4,6-Trimethyl-4,6-Dimethoxy-Carbonyl-Tridecandisäure
d) 19 - 26 Gewichtsprozent 8,9-Dimethyl-8,9-Dimethoxy-Carbonyl-Hexadecandiesäure

Desweiteren kann MMA-10RA 5 - 10 Gewichtsprozent an üblichen, die gewünschten Eigenschaften vom MMA-10RA nicht beeinträchtigenden Verunreinigungen enthalten.

Besonders vorteilhaft kann eine MMA-10R - Mischung eingesetzt werden, die folgende Bestandteile enthält:
a) 45,6 Gewichtsprozent 2-Methyl-Nonandisäure
b) 13 Gewichtsprozent 2,4-Dimethyl-4-Methoxy-Carbonyl-Undecandisäure
c) 12,1 Gewichtsprozent 2,4,6-Trimethyl-4,6-Dimethoxy-Carbonyl-Tridecandisäure
d) 22,3 Gewichtsprozent 8,9-Dimethyl-8,9-Dimethoxy-Carbonyl-Hexadecandiesäure

Der erfindungsgemäße Betriebselektrolyt hat den Vorteil, daß er gegenüber dem bekannten Betriebselektrolyt bei gleicher oder verbesserter Funkenspannung eine erhöhte Leitfähigkeit aufweist. Dadurch weisen die mit dem erfindungsgemäßen Betriebselektrolyten aufgebauten Aluminium-Elektrolyt-Kondensatoren verringerte ohmsche Verluste auf. Dies zeigt sich im allgemeinen durch einen verringerten tan δ-Wert.

Es ist darüber hinaus ein Betriebselektrolyt für Aluminium-Elektrolyt-Kondensatoren besonders vorteilhaft, der folgende Bestandteile umfaßt:
a) 35 - 80 Gew.-% Ethylenglykol
b) 25 - 35 Gew.-% Diethylenglykol
c) 0,3 - 0,7 Gew.-% p-Nitrobenzoesäure
d) 0,08 - 0,12 Gew.-% Ammoniumhypophosphit
e) 2,5 - 6,0 Gew.-% Ammoniumpentaborat
f) 0 - 3 Gew.-% eines oder mehrerer Polyvinylalkohole
g) 10 - 35 Gew.-% einer Stoffmischung, die die Diammoniumsalze von 2-Methyl-Nonandisäure, 2,4-Dimethyl-4-Methoxy-Carbonyl-Undecandisäure, 2,4,6-Trimethyl-4,6-Dimethoxy-Carbonyl-Tridecandisäure und 8,9-Dimethyl-8,9-Dimethoxy-Carbonyl-Hexadecandiesäure enthält.

Neben diesen wesentlichen Bestandteilen kann die erfindungsgemäße Ethylenglykolmischung noch geringe Mengen weiterer üblicher Bestandteile enthalten, die die gewünschten Eigenschaften der Mischung nicht beeinträchtigen.

Ferner gibt die Erfindung einen Aluminium-Elektrolyt-Kondensator an, bei dem der Elektrolyt der erfindungsgemäße Betriebselektrolyt ist. Der Kondensator weist einen Schichtstapel mit einer Anodenschicht und einer Kathodenschicht auf. Zwischen der Anodenschicht und der Kathodenschicht ist eine mit dem Elektrolyten getränkte Trennschicht angeordnet. Auf ihren der Trennschicht zugewandten Seiten weisen die Anoden- und die Kathodenschicht jeweils eine Oxidschicht auf. Die Anodenschicht und die Kathodenschicht bestehen aus Aluminium, während die Oxidschichten aus Aluminiumoxid bestehen.

Der erfindungsgemäße Aluminium-Elektrolyt-Kondensator hat den Vorteil, daß er aufgrund der Verwendung des erfindungsgemäßen Betriebselektrolyten verringerte ohmsche Verluste, insbesondere einen verringerten ESR aufweist. Dadurch können Kondensatoren mit kleineren tan δ-Werten hergestellt werden.

Ferner gibt die Erfindung die Verwendung des Betriebselektrolyten in einem Aluminium-Elektrolyt-Kondensator für Spannungen zwischen 400 und 500 V an. Insbesondere ist der erfindungsgemäße Betriebselektrolyt für Kondensatoren mit einer Betriebsspannung von 450 V geeignet.

Im folgenden wird die Erfindung anhand von Ausführungsbeispielen und der dazugehörigen Figur näher erläutert.

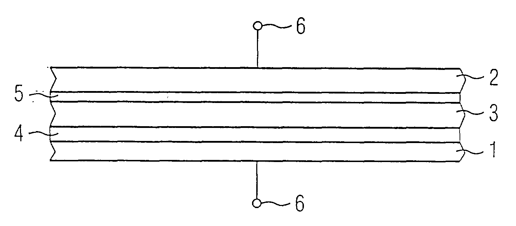

Die Figur zeigt beispielhaft den Schichtstapel eines erfindungsgemäßen Aluminium-Elektrolyt-Kondensators im schematischen Querschnitt.

Der Schichtstapel des erfindungsgemäßen Elektrolyt-Kondensators besteht aus einer Anodenschicht 1, die an ihrer Oberseite eine Anoden-Oxidschicht 4 aufweist. Die Anodenschicht 1 ist eine Aluminiumfolie von ca. 50-120 µm Dicke. Die Anoden-Oxidschicht 4 besteht aus Aluminiumoxid und weist eine Dicke zwischen 1 und 10 µm auf.

Über der Anoden-Oxidschicht 4 ist eine Trennschicht 3 angeordnet. Die Trennschicht 3 hat eine Dicke zwischen 30 und 200 µm und besteht vorzugsweise aus Papier. Über der Trennschicht 3 ist eine Kathodenschicht 2 angeordnet, die auf ihrer der Trennschicht 3 zugewandten Seite eine Kathoden-Oxidschicht 5 aufweist. Die Trennschicht 3 ist mit dem erfindungsgemäßen Betriebselektrolyten getränkt.

Die Kathodenschicht 2 besteht aus Aluminium und weist eine Dicke zwischen 20 und 60 µm auf. Die Kathoden-Oxidschicht 5 besteht aus Aluminiumoxid und weist eine Dicke zwischen 1,5 und 3 nm auf. Die Anodenschicht 1 und die Kathodenschicht 2 sind jeweils mit einem Kondensatoranschluß 6 elektrisch leitend verbunden.

Der in der Figur gezeigte Schichtstapel liegt üblicherweise in Form eines auf einen Dorn gewickelten Wickels vor, der in einen Aluminiumbecher eingebaut ist.

In der folgenden Tabelle 1 werden drei erfindungsgemäße Ausführungsbeispiele(Beispiele 2 bis 4) einem bekannten Betriebselektrolyten (Beispiel 1) hinsichtlich ihrer Zusammensetzung und ihrer elektrischen Kenndaten (Leitfähigkeit, gemessen in mS/cm und Funkenspannung, gemessen in Volt) gegenübergestellt.

**Tabelle 1:**

| Zusammensetzung verschiedener Betriebselektrolyten | | | | |
|---|---|---|---|---|
| | Beispiel 1 | Beispiel 2 | Beispiel 3 | Beispiel 4 |
| Ethylenglykol [Gew. %] | 39,4 | 74,4 | 69,4 | 64,4 |
| Diethylenglykol [Gew. %] | 30 | 0 | 0 | 0 |
| p-Nitrobenzoesäure [Gew. %] | 0,5 | 0,5 | 0,5 | 0,5 |
| Ammoniumhypophosphit[Gew. %] | 0,1 | 0,1 | 0,1 | 0,1 |
| Ammoniumpentaborat [Gew. %] | 3 | 3 | 3 | 3 |
| Mannit [Gew. %] | 2 | 0 | 0 | 0 |
| Polyvinylalkohol [Gew. %] | 0 | 2 | 2 | 2 |
| MMA-10RA [Gew. %] | 25 | 20 | 25 | 30 |
| LF [mS/cm] | 1,2 | 1,3 | 1,5 | 1,7 |
| Funkenspannung [V] | 475 | 520 | 510 | 500 |

Die Ausführungsbeispiele zeigen, daß durch die Zugabe von Polyvinylalkoholen bei gleichbleibender beziehungsweise verbesserter Funkenspannung von 500 bis 520 V eine Verbesserung der Leitfähigkeit um bis zu 0,5 mS/cm erzielt werden kann.

Die Eigenschaften von mit dem erfindungsgemäßen Betriebselektrolyten (gemäß Beispiel 4) hergestellten Kondensatoren wurden auch im Langzeittest mit auf der Basis von bekannten Betriebselektrolyten (gemäß Beispiel 1) hergestellten Kondensatoren verglichen. Die folgende Tabelle 2 zeigt die Testdaten eines Schraubanschlußkondensators mit einer Nennkapazität von 4200 µF und einer Betriebsspannung von 450 V:

**Tabelle 2:**

| Testdaten von Schraubanschlußkondensatoren | | |
|---|---|---|
| | Beispiel 1 | Beispiel 4 |
| Testdauer [h] | tan δ [%] | tan δ [%] |
| 0 | 5,0 | 3,6 |
| 500 | 5,0 | 3,6 |
| 1000 | 5,1 | 3,7 |
| 2000 | 5,4 | 4,0 |

Es zeigt sich, daß auch über eine Testdauer von mehreren 1000 Stunden die Stabilität der erfindungsgemäßen Kondensatoren nicht hinter der Stabilität der bekannten Kondensatoren zurückbleibt und daß gleichzeitig ein dauerhaft verbessertes tan δ erzielt werden konnte.

Die Erfindung beschränkt sich nicht auf die beispielhaft gezeigten Ausführungsformen, sondern wird in ihrer allgemeinsten Form durch Anspruch 1 und Anspruch 3 definiert.

## Patentansprüche

1. Betriebselektrolyt mit:
a) 25 - 90 Gew.-% Ethylenglykol
b) 20 - 40 Gew.-% Diethylenglykol
c) 0,2 - 2 Gew.-% p-Nitrobenzoesäure
d) 0,05 - 0,2 Gew.-% Ammoniumhypophosphit
e) 2 - 8 Gew.-% Ammoniumpentaborat
f) 0 - 3 Gew.-% eines oder mehrerer Polyvinylalkohole
g) 10 - 50 Gew.-% einer Stoffmischung, die die Diammoniumsalze von 2-Methyl-Nonandisäure, 2,4-Dimethyl-4-Methoxy-Carbonyl-Undecandisäure, 2,4,6-Trimethyl-4,6-Dimethoxy-Carbonyl-Tridecandisäure und 8,9-Dimethyl-8,9-Dimethoxy-Carbonyl-Hexadecandiesäure enthält.

2. Betriebselektrolyt nach Anspruch 1 mit
a) 35 - 80 Gew.-% Ethylenglykol
b) 25 - 35 Gew.-% Diethylenglykol
c) 0,3 - 0,7 Gew.-% p-Nitrobenzoesäure
d) 0,08 - 0,12 Gew.-% Ammoniumhypophosphit
e) 2,5 - 6,0 Gew.-% Ammoniumpentaborat
f) 0 - 3 Gew.-% eines oder mehrerer Polyvinylalkohole
g) 10 - 35 Gew.-% einer Stoffmischung, die die Diammoniumsalze von 2-Methyl-Nonandisäure, 2,4-Dimethyl-4-Methoxy-Carbonyl-Undecandisäure, 2,4,6-Trimethyl-4,6-Dimethoxy-Carbonyl-Tridecandisäure und 8,9-Dimethyl-8,9-Dimethoxy-Carbonyl-Hexadecandiesäure enthält.

3. Al-Elektrolyt-Kondensator mit einem Betriebselektrolyt nach Anspruch 1 bis 3, der einen Schichtstapel mit einer Anoden- (1) und einer Kathodenschicht (2) sowie einer dazwischenliegenden, mit dem Betriebselektrolyt getränkten Trennschicht (3) aufweist, bei dem die Anoden- (1) und die Kathodenschicht (2) auf ihrer der Trennschicht (3) zugewandten Seite jeweils eine Oxidschicht (4, 5) aufweisen.

4. Verwendung des Betriebselektrolyten nach Anspruch 1 oder 2 als Elektrolyt in einem Al-Elektrolyt-Kondensator für Spannungen zwischen 400 und 500 V.
